# EUROPÄISCHE PATENTANMELDUNG

(11) **EP 0 933 264 A1**
(43) Veröffentlichungstag der Anmeldung: **04.08.1999**
(21) Anmeldenummer: 98123854.6
(22) Anmeldetag: 16.12.1998
(51) Int. Cl.: B60R 21/20

(54) **Airbaganordnung an einem Fahrzeug mit einem bewegbaren Dach**

(30) Priorität: 28.01.1998 DE 19803164
(71) Anmelder: Bayerische Motoren Werke Aktiengesellschaft, 80788 München (DE)
(72) Erfinder: Schuster, Gerd, Dr., 85764 Oberschleissheim (DE); Ritzl, Friedrich, 82538 Geretsried (DE)

(57) **Zusammenfassung**

Die Erfindung betrifft eine Airbaganordnung an einem Fahrzeug mit einem bewegbaren Dach, wobei zumindest ein üblicherweise zusammengefaltet und verdeckt angeordneter Airbag (4) in Notfallsituationen aufgeblasen und entfaltet wird, um den oder die Fahrzeuginsassen vor Verletzungen zu schützen, und wobei es sich beim bewegbaren Dach insbesondere um ein solches mit einem starren Deckelteil handelt, welches im geschlossenen Zustand eine von einem Rahmen (3) begrenzte Dachluke (2) verschließt. Erfindungsgemäß befindet sich der Airbag (4) im zusammengefalteten Zustand am Rahmen (3) und überdeckt im entfalteten Zustand die Dachluke (2) zumindest teilweise. Der Airbag (4) kann schlauchförmig oder flächig ausgebildet sein und ist an am Rahmen (3) der Dachluke (2) vorgesehenen Befestigungspunkten angebunden (5a,5b).

## Beschreibung

Die Erfindung betrifft eine Airbaganordnung an einem Fahrzeug mit einem bewegbaren Dach, wobei zumindest ein üblicherweise zusammengefaltet und verdeckt angeordneter Airbag in Notfallsituationen aufgeblasen und entfaltet wird, um den oder die Fahrzeuginsassen vor Verletzungen zu schützen.

### [Stand der Technik]

Zum technischen Umfeld wird neben der DE 296 11 683 U auf die DE 40 31 552 C2 verwiesen. Die erstgenannte Schrift zeigt eine Airbagvorrichtung an einem Cabrio-Fahrzeug, wobei am bzw. im Faltdach dieses Cabriolets die sog. Airbags, d.h. Gaskissen bzw. Luftsäcke angeordnet sind, die in Notfallsituationen aufgeblasen und entfaltet werden, um den oder die Fahrzeuginsassen vor Verletzungen zu schützen. Systembedingt können diese Airbags nur dann wirksam sein, wenn das Verdeck bzw. Faltdach des Cabriolets geschlossen ist.

Die zweitgenannte Schrift zeigt eine Sicherheitsvorrichtung eines Fahrzeuges bzw. Personenkraftwagens mit einem sog. Schiebedach, d.h. mit einem eine Dachöffnung oder Dachluke aufweisenden Fahrzeugdach, wobei die Dachluke mittels eines bewegbaren Deckelteils verschließbar ist. Befindet sich das verschiebbare Deckelteil in seiner die Dachluke freigebenden Position, so besteht zumindest theoretisch eine zusätzliche Verletzungsgefahr für Fahrzeuginsassen, da diese bei einem extremen Unfall des Fahrzeuges durch die Dachluke hinausgeschleudert werden könnten und/oder sich bei einem (in der täglichen Praxis äußerst unwahrscheinlichen ) Überschlag des Fahrzeuges am Rahmen verletzen könnten. Als Sicherheitsmaßnahme hierfür schlägt die DE 40 31 525 C2 eine schnellwirkende Schließvorrichtung vor, die das Deckelteil in Krisensituationen quasi schlagartig in die die Dachluke verschließende Position bewegt.

### [Aufgabe der Erfindung]

Nachdem die letztgenannte Lösung jedoch selbst wieder eine Gefahr für den oder die Fahrzeuginsassen darstellen kann, während die in der eingangs genannten DE 296 11 683 U beschriebene Airbagvorrichtung bei offengelegtem Fahrzeugdach überhaupt nicht aktivierbar ist, hat sich die vorliegende Erfindung die Aufgabe gestellt, eine hinsichtlich der Sicherheit verbesserte Airbag-Anordnung an einem Fahrzeug mit einem bewegbaren Dach aufzuzeigen.
Die Lösung dieser Aufgabe ist dadurch gekennzeichnet, daß es sich beim bewegbaren Dach um ein solches mit einem starren Deckelteil oder einem vollständig faltbaren Dachteil handelt, welches im geschlossenen Zustand eine von einem Rahmen begrenzte Dachluke verschließt, wobei sich der Airbag im zusammengefalteten Zustand am Rahmen befindet und im entfalteten Zustand die Dachluke zumindest teilweise überdeckt. Vorteilhafte Aus- und Weiterbildungen sind Inhalt der Unteransprüche.

Erfindungsgemäß wird somit für ein Fahrzeug und insbesondere einen Personenkraftwagen mit einem im wesentlichen üblichen Schiebedach ein Airbag bzw. ein Gaskissen oder Luftsack vorgeschlagen, welcher die offengelegte Dachluke oder Dachöffnung in Notfallsituationen absichert, derart, daß er die Dachluke im entfalteten Zustand zumindest teilweise überdeckt. Im zusammengefalteten Zustand hingegen befindet sich der Airbag am Rahmen und ist im Bereich desselben sozusagen verdeckt angeordnet. Eine bestmögliche Wirkung durch günstige Überdeckung der Dachluke zeigt der Airbag dabei im entfalteten Zustand, wenn sich an bezüglich des Airbags einander gegenüber liegenden Stellen des Rahmens Befestigungspunkte für denselben befinden. Dabei können verschiedene, an sich grundsätzlich bekannte Airbagtypen oder Airbagsysteme zum Einsatz kommen.

Besonders gut geeignet ist ein aus der WO 94/19215 unter dem Namen ITS (Inflatable Tubular Structure) bekanntes System mit einem schlauchförmigen Luftsack, welches im zusammengefalteten Zustand zwischen den beiden Befestigungspunkten eine größere Längserstreckung besitzt, als im entfalteten Zustand. So kann dieser schlauchförmige Airbag im zusammengefalteten Zustand längs zweier aneinander anstoßender Rahmen-Abschnitte angeordnet sein und im entfalteten Zustand bspw.diagonal die (offene) Dachluke überdecken, wenn sich die Befestigungspunkte in den voneinander abgewandten Endbereichen dieser besagten Rahmenabschnitte befinden. Selbstverständlich können solchermaßen oder andersartig angeordnet auch zwei oder mehrere Airbags vorgesehen sein.

Eine günstige Überdeckung der Dachöffnung/Dachluke ergibt sich aber auch mit den sog. Curtain-Airbagsystemen, bei welchen der Airbag ähnlich eines Vorhanges angeordnet ist, wobei im zusammengefalteten Zustand der Airbag einem zusammengerafften Vorhang entspricht, der über Führungsschienen in den entfalteten Zustand gebracht werden kann und der sich sodann quasi als 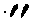 Luftmatratze" über den Bereich der (offenen) Dachluke erstreckt, wozu er an deren Form angepaßt ist.

### [Beispiele]

Näher erläutert wird die Erfindung anhand mehrerer lediglich prinzipiell dargestellter bevorzugter Ausführungsbeispiele. Es zeigt:
- Fig. 1: eine Perspektivanordung an einem Fahrzeugdach für ein schlauchförmiges Airbagsystem,
- Fig. 2: eine Aufsicht auf eine alternative Anordnung für ein System nach Fig.1,
- Fig. 3: eine Aufsicht auf eine weitere Anordnung für ein System nach Fig.1,
- Fig. 4: eine Perspektivanordung an einem Fahrzeugdach für ein vorhangartiges Airbagsystem,
- Fig. 5: den Schnitt A-A aus Fig. 4, sowie
- Fig. 6: den Schnitt B-B aus Fig. 4.

Mit der Bezugsziffer 1 ist das Fahrzeugdach eines nicht näher dargestellten Personenkraftwagens bezeichnet, das eine von einem ebenfalls nicht dargestellten bewegbaren Deckelteil oder einem vollständig faltbaren Dachteil verschließbare Dachluke 2 (bzw. Dachöffnung 2) aufweist. Insbesondere ist diese Dachluke 2 mit dem Deckelteil als ein an sich bekanntes Schiebedach ausgebildet, wobei sämtliche Figuren die Dachluke 2 im geöffneten Zustand zeigen. Der Übersichtlichkeit halber wurde daher auf die Darstellung des Deckelteiles (oder des vollständig faltbaren Dachteiles) verzichtet.

Begrenzt wird die Dachluke 2 von einem in seiner Gesamtheit mit 3 bezeichneten Rahmen, der aus einem (bezüglich des Fahrzeuges) vorderen Rahmen-Abschnitt 3a, einem hinteren Rahmen-Abschnitt 3b sowie aus den beiden seitlichen Rahmen-Abschnitten 3c, 3d besteht. Im Bereich der Dachluke 2 ist ein Airbag 4 angeordnet, der in den einzelnen Figuren teilweise im zusammengefalteten Zustand (hierfür wird die Bezugsziffer 4' verwendet) und teilweise im entfalteten Zustand (Bezugsziffer 4) dargestellt ist.

Im entfalteten Zustand ist der Airbag 4 aufgeblasen und schützt somit, da er dann wie ersichtlich erfindungsgemäß die offene Dachluke 2 zumindest teilweise überdeckt, den oder die Insassen des Personenkraftwagens bspw. bei einem Überschlag des Fahrzeuges vor Verletzungen. Im zusammengefalteten Zustand befindet sich der Airbag 4' am Rand der Dachluke 2, d.h. er ist verdeckt und somit quasi versteckt am Rahmen 3 angeordnet. Selbstverständlich muß er hierbei in geeigneter Weise am Rahmen 3 befestigt sein, bspw. mittels nicht dargestellter Abdeckungen, die im Bedarfsfall aufklappen können. Um die Schutzfunktion im entfalteten, aufgeblasenen Zustand wahrnehmen zu können, muß der Airbag 4 selbstverständlich auch hierbei in geeigneter Weise befestigt sein, und zwar idealerweise abermals am Rahmen 3, wobei die hier wirksamen sog. Befestigungspunkte 5a, 5b an einander gegenüberliegenden Enden des Airbags 4 vorgesehen sind, so daß der Airbag 4 wirkungsvoll die Dachluke 2 zumindest teilweise überdecken kann.

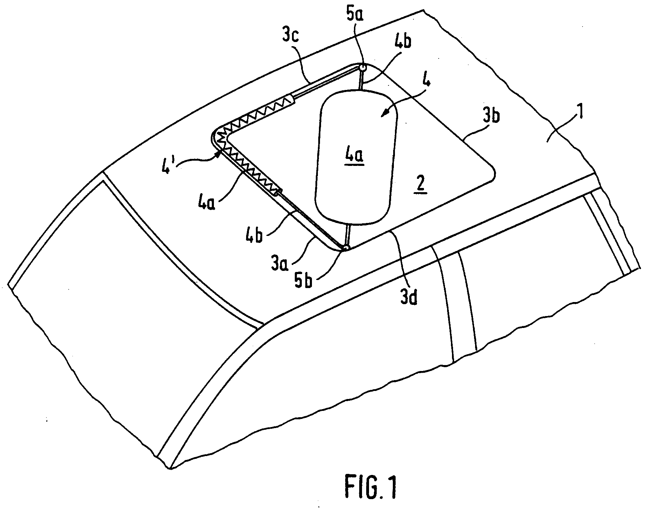

Bei den Ausführungsbeispielen nach den Figuren 1, 2, 3 ist der Airbag 4 (4') schlauchförmig ausgebildet und derart zusammengefaltet, daß seine Längserstreckung zwischen den Befestigungspunkten 5a, 5b im zusammengefalteten Zustand (4') größer ist als im entfalteten Zustand (4). Insbesondere handelt es sich bei diesem schlauchförmigen Airbag 4 nach den Figuren 1 bis 3 um einen in der WO 94/19215 beschriebenen ITS-Airbag. Vom eigentlichen Luftsackteil 4a des Airbags 4, 4' führen dabei Haltebänder 4b zu den beiden Befestigungspunkten 5a, 5b.

Beim Ausführungsbeispiel nach Fig. 1, welches einen einzigen die Dachluke 2 zumindest teilweise überdeckenden Airbag 4 zeigt, befinden sich diese Befestigungspunkte 5a, 5b an bezüglich der Dachluke 2 aneinander anstoßenden Rahmen-Abschnitten 3a, 3c, und zwar jeweils im vom Anstoßpunkt derselben abgewandten Endbereich. Hier ist die Anordnung so getroffen, daß die beiden Befestigungspunkte 5a, 5b in einander bezüglich der Dachluke 2 diagonal gegenüber liegenden Ecken liegen, so daß der entfaltete Airbag 4 die offene Dachluke 2 diagonal durchquert und somit bestmöglich überdeckt. Demzufolge können die Befestigungspunkte 5a, 5b hier auch als an den Rahmen-Abschnitten 3b, 3d liegend beschrieben werden.

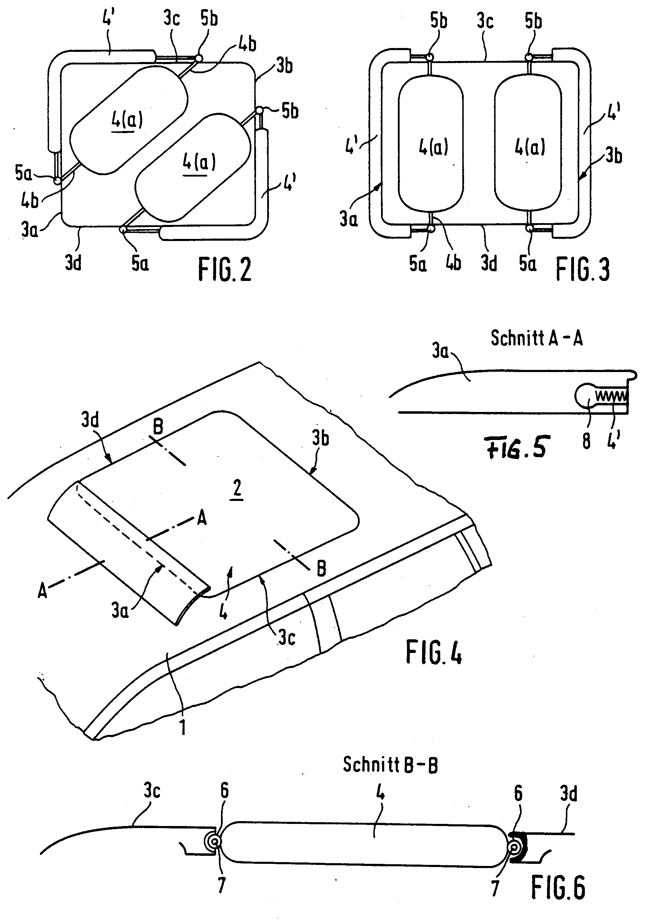

Ähnlich getroffen ist die Anordnung beim Ausführungsbeispiel nach Fig. 2, wobei hier zwei Airbags 4 (bzw. 4') vorgesehen sind, deren Befestigungspunkte an aneinander anstoßenden Rahmen-Abschnitten 3a, 3c (für den ersten Airbag 4) bzw. 3b, 3d (für den zweiten Airbag 4) liegen.

Auch beim Ausführungsbeispiel nach Fig. 3 sind zwei Airbags 4 (bzw. 4') vorhanden. Hier ist die Anordnung so getroffen, daß sich deren Befestigungspunkte 5a, 5b (bzw. genauer die Befestigungspunkte 5a, 5b für die Haltebänder 4b) an einander gegenüberliegenden Rahmen-Abschnitten 3c, 3d befinden. Da es sich hierbei um die seitlichen Rahmen-Abschnitte 3c, 3d handelt, überdecken die beiden Airbags 4 die Dachluke 2 somit in Fahrzeug-Querrichtung. Alternativ kann jedoch die Anordnung auch so getroffen werden, daß sich die beiden Airbags 4 im wesentlichen parallel zueinander (oder auch gegeneinander geneigt) im wesentlichen in Fahrzeug-Längsrichtung erstrecken.

Beim Ausführungsbeispiel nach Fig. 4, von welchem in den Fig. 5, 6 die besagten Schnitte in vereinfachter Weise dargestellt sind, ist der Airbag 4 im entfalteten Zustand der Form bzw. der Fläche der Dachluke 2 angepaßt. Es handelt sich somit um einen vorhangförmigen Airbag 4, der auch unter der Bezeichnung 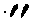 Curtain-Airbagsystem" bekannt ist. Über Führungsösen 6, die an einander gegenüberliegenden Seitenkanten des Airbags 4 vorgesehen sind, ist dieser Airbag 4 in Führungsschienen 7 geführt. Diese Führungsschienen 7 verlaufen hier parallel zu den seitlichen Rahmen-Abschnitten 3c, 3d nahe derselben und sind idealerweise an diesen (alternativ an den Rahmen-Abschnitten 3a, 3b) befestigt. Dabei übernehmen die Führungsschienen 7 die Funktion der in Verbindung mit den Ausführungsbeispielen nach den Figuren 1 - 3 erläuterten Befestigungspunkte 5a, 5b. Demzufolge sind diese Befestigungspunkte 5a, 5b in den Figuren 4 - 6 nicht gezeigt, wobei jedoch im weiteren Sinne jede der beiden Führungsschienen als ein Befestigungspunkt 5a bzw. 5b bezeichnet werden kann.

Ähnlich einem zugezogenem Vorhang wird der entfaltete Airbag 4 somit von den Führungsschienen 7 getragen und überdeckt dabei die offene Dachluke 2 im wesentlichen vollflächig, wie auch Fig. 6 zeigt. Im zusammengefalteten Zustand, der in Fig.5 dargestellt ist, befindet sich der Airbag 4' ähnlich einem auf den Führungsschienen 7 zusammengerafften Vorhang dabei vollständig im Bereich bevorzugt des vorderen Rahmen-Abschnittes 3a, jedoch kann alternativ der Airbag 4' auch am hinteren Rahmen-Abschnitt 3b zusammengefaltet sein. Hier wird somit der Airbag 4 (bzw. 4') in Richtung der Fahrzeug-Längsachse entfaltet, alternativ ist jedoch auch eine Entfaltung in Richtung der Fahrzeug-Querachse möglich.

Um sicherzustellen, daß der Airbag 4 im entfalteten Zustand eine effiziente Sicherungsfunktion auch noch dann ausübt, wenn ein Teil des in den Airbag eingeführten und diesen hierbei aufblasenden Gases wieder aus dem Airbag entwichen ist, kann vorgesehen sein, daß zumindest die endseitigen, möglicherweise jedoch auch mehrere Führungsösen 6 in den Führungsschienen 7 verhaken, nachdem sich der Airbag 4 entfaltet hat. Dieses Merkmal ist hier der Einfachheit halber nicht gezeigt.

Gezeigt ist in Fig. 5 jedoch ein Gaskanal 8, über welchen das den Airbag 4' bzw. 4 aufblasende und dabei entfaltende Gas in den Airbag 4' eingeleitet wird. Selbstverständlich ist ein solcher Gaskanal auch bei den Ausführungsbeispielen nach den Figuren 1 - 3 erforderlich, jedoch ebenfalls der Einfachheit halber nicht gezeigt. Im Übrigen kann diese Einbringung des Gases zum Aufblasen des Airbags wie im Stand der Airbag-Technik üblich gestaltet sein. Insbesondere kann auch die sog. Zündauslösung, aufgrund derer das aufblasende Gas dem Airbag 4 zugeführt wird, wie üblich erfolgen.

Wesentlich ist, daß die Dachluke 2 bzw. Dachöffnung 2 insbesondere im Falle eines Fahrzeugüberschlags durch den Einsatz von einem oder mehreren Airbagsystemen bspw. mit der Funktionsweise eines ITS (Inflatable Tubular Struktur) oder anderer flächig gestalteter Airbagformen mit entsprechenden Abspannungen zum Zugkraftaufbau, geschlossen wird. Die sog. Abspannungen führen dabei zu den hier mit 5a, 5b bezeichneten Befestigungspunkten, welche beim Ausführungsbeispiel nach den Fig. 4 - 6 durch die Führungsschienen 7 gebildet werden. Über ein bereits kurz erwähntes Zündsignal, das bspw. von einer Überrollsensorik ausgesteuert werden kann, wird dann eine Airbagauslösung vorgenommen. Der oder die Airbags 4' (4) werden dann aus Ihrer Unterbringung im seitlichen ( vorderen, hinteren) Dach-Rahmenbereich unter Aufbau einer systemeigenen Spannung zwischen den Befestigungspunkten 5a, 5b (bzw. Führungsschienen 7) nach der Zündung positioniert. Die Abdeckung der Dachöffnung 2 ermöglicht durch die Zugkraftaufnahme der Airbags 4 den Rückhalt des Insassen bzw. dessen Körperteile (Arme, Hände) bspw. bei einem Fahrzeugüberschlag. Durch eine entsprechende Anordnung und Ausgestaltung des bzw. der Airbags 4 (4') wird der Fahrzeuginsasse bzw. werden die Fahrzeuginsassen vor Kontaktverletzungen mit harten Strukturteilen (Schiebedachrahmen) und vor Interaktionsverletzungen geschützt. Dabei können eine Vielzahl von Details insbesondere konstruktiver Art durchaus abweichend von den gezeigten Ausführungsbeispielen gestaltet sein, ohne den Inhalt der Patentansprüche zu verlassen.

### [Bezugszeichenliste]

- 1: Fahrzeugdach
- 2: Dachluke oder Dachöffnung
- 3: Rahmen
- 3a: vorderer Rahmen-Abschnitt
- 3b: hinterer Rahmen-Abschnitt
- 3c: seitlicher Rahmen-Abschnitt
- 3d: seitlicher Rahmen-Abschnitt
- 4: Airbag (im entfalteten Zustand)
- 4': Airbag (im zusammengefalteten Zustand)
- 4a: Luftsackteil von 4, 4'
- 4b: Halteband von 4, 4'
- 5a: erster Befestigungspunkt für 4
- 5b: zweiter Befestigungspunkt für 4
- 6: Führungsöse
- 7: Führungsschiene
- 8: Gaskanal

## Patentansprüche

1. Airbaganordnung an einem Fahrzeug mit einem bewegbaren Dach, wobei zumindest ein üblicherweise zusammengefaltet und verdeckt angeordneter Airbag (4', 4) in Notfallsituationen aufgeblasen und entfaltet wird, um den oder die Fahrzeuginsassen vor Verletzungen zu schützen,
dadurch gekennzeichnet, daß es sich beim bewegbaren Dach um ein solches mit einem starren Deckelteil oder einem vollständig faltbaren Dachteil handelt, welches im geschlossenen Zustand eine von einem Rahmen (3) begrenzte Dachluke (2) verschließt, wobei sich der Airbag im zusammengefalteten Zustand (4') am Rahmen (3) befindet und im entfalteten Zustand (4) die Dachluke (2) zumindest teilweise überdeckt.

2. Airbaganordnung nach Anspruch 1,
dadurch gekennzeichnet, daß sich an bezüglich des Airbags (4) einander gegenüber liegenden Stellen des Rahmens (3) Befestigungspunkte (5a, 5b) für den Airbag (4) befinden.

3. Airbaganordnung nach Anspruch 1 oder 2,
dadurch gekennzeichnet, daß der Airbag (4) schlauchförmig ausgebildet ist.

4. Airbaganordnung nach Anspruch 3,
dadurch gekennzeichnet, daß sich die Befestigungspunkte (5a, 5b) eines oder mehrerer schlauchförmiger Airbags (4) an bezüglich der Fahrzeug-Dachluke (2) einander gegenüber liegenden Rahmen-Abschnitten (3a, 3b, 3c, 3d) befinden.

5. Airbaganordnung nach Anspruch 3,
dadurch gekennzeichnet, daß sich die Befestigungspunkte (5a, 5b) eines oder mehrerer schlauchförmiger Airbags (4) an bezüglich der Fahrzeug-Dachluke (2) aneinander anstoßenden Rahmen-Abschnitten (3a, 3c, 3b, 3d) befinden.

6. Airbaganordnung nach Anspruch 1 oder 2,
dadurch gekennzeichnet, daß der Airbag (4) im entfalteten Zustand der Form der Dachluke (2) angepaßt ist.

7. Airbaganordnung nach Anspruch 6,
dadurch gekennzeichnet, daß der Airbag (4) in parallelen einander gegenüberliegenden Rahmen-Abschnitten (3c, 3d) im wesentlichen längs dieser verlaufenden Führungsschienen (7) geführt ist.

8. Airbaganordnung nach Anspruch 7,
dadurch gekennzeichnet, daß zumindest die endseitigen, am Airbag (4) befestigten und diesen in den Führungsschienen (7) führenden Führungsösen (6) bei Entfaltung des Airbags (4) in den Führungsschienen (7) verhakbar sind.
